# DEMANDE DE BREVET EUROPEEN

(11) **EP 0 996 062 A1**
(43) Date de publication de la demande: **26.04.2000**
(21) Numéro de dépôt: 99402565.8
(22) Date de dépôt: 18.10.1999
(51) Int. Cl.: G06F 11/14, G06F 11/00

(54) **Procédé d'obtention d'informations sur des processus et système pour sa mise en oeuvre**

(30) Priorité: 20.10.1998 FR 9813146
(71) Demandeur: BULL S.A., 78434 Louveciennes Cedex (FR)
(72) Inventeur: Hanin, Samuel, 78330 Fontenay le Fleury (FR)

(57) **Abrégé**

La présente invention concerne un procédé d'obtention d'informations relatives à au moins un processus (P) opérant au sein d'un système d'exploitation consistant à détecter la création ou la terminaison de chaque processus (P1-P6), saisir les caractéristiques de chaque processus, créer une structure (17) dans laquelle les caractéristiques de chaque processus créé ou terminé sont mémorisées et les relations entre processus ordonnées, extraire des informations à partir de ladite structure.

Le système informatique de mise en oeuvre dudit procédé comprend un processeur, une mémoire centrale (3), et est géré par un système d'exploitation. Il contient en mémoire un programme permettant l'exécution d'un processus (P1) de gestion.

L'invention présente l'avantage d'obtenir des informations multiples sur l'ensemble des processus en activité ou terminés ou sur une partie d'entre eux.

## Description

La présente invention concerne le domaine des systèmes d'exploitation et plus particulièrement des processus opérant dans lesdits systèmes. Elle se rapporte à un procédé d'obtention d'informations relatives à des processus ainsi qu'à un système informatique pour sa mise en oeuvre.

### L'art antérieur

On connaît des systèmes d'exploitation dépourvus de moyens permettant d'obtenir des informations sur l'ensemble des processus en cours d'exécution et notamment sur leurs relations de parenté, leurs paramètres de lancement, leurs codes de terminaison, ainsi que sur les processus ayant achevé leur traitement sur le système. Le type même actuel de tels systèmes d'exploitation est le système Windows NT (terme déposé à titre de marque). On définit donc dans la description qui suit par l'expression « de type Windows NT (marque déposée) », les systèmes d'exploitation dépourvus desdits moyens d'obtention d'information ou pourvus de tels moyens mais non accessibles ou utilisables par tout utilisateur. De tels systèmes d'exploitation présentent de nombreux inconvénients.

Premièrement, dans les systèmes d'exploitation de type Windows NT (marque déposée), il est nécessaire d'accéder à l'intérieur d'un processus pour recueillir des informations sur ledit processus telles que son lien de parenté avec d'autres processus, ses paramètres de lancement, etc. Il n'est pas possible d'avoir une vue d'ensemble des caractéristiques de tous les processus en activité ou d'une partie d'entre eux. Les processus en cours d'exécution ne sont susceptibles d'être visualisés dans leur ensemble que par leur identifiant (numéro qui identifie le processus dans le système) et par leur nom.

Deuxièmement, l'utilisateur ne visualise à un instant donné, que les identifiants des processus en cours d'exécution à cet instant dans le système concerné. Ainsi, l'utilisateur ne peut pas avoir connaissance des processus qui se terminent avant ladite visualisation et lesdits processus terminés ne sont donc pas susceptibles d'être retrouvés. Il n'est prévu aucun moyen permettant de conserver une trace des processus terminés. De plus, dans les systèmes de type Windows NT (marque déposée), l'identifiant d'un processus terminé est réutilisé pour désigner un nouveau processus. Ainsi , par exemple, on suppose qu'un processus père P1 ayant pour identifiant le nombre 100 ait pour processus fils un processus P2 dont l'identifiant est le nombre 101. Plus tard, le processus père P1 est détruit et son identifiant 100 est réutilisé pour désigner un processus P3. Il ne sera alors pas possible de retrouver le père du processus P2 à l'aide de son identifiant, puisque l'identifiant 100 ne désigne plus le processus père P1 du processus P2 ayant pour identifiant le nombre 101. Il en résulte une grande difficulté pour retrouver l'historique des traitements effectués sur une telle machine ou pour obtenir un suivi des activités du système.

Troisièmement, l'absence immédiate d'un historique de l'activité sur une machine rend difficile la mise au point d'applications complexes présentant un grand nombre de processus de courte durée. Il en est de même pour le suivi des fins de code de terminaison d'une suite de traitement par lots (Batch processing).

Quatrièmement, lorsqu'un problème survient, les traitements passés n'étant pas directement accessibles rendent difficile la résolution dudit problème.

Cinquièmement, il est souvent intéressant d'accorder des priorités à certaines familles de processus en vue d'une optimisation du système. Or, avec des systèmes du type Windows NT (marque déposée), aucune optimisation n'est possible puisque l'on ne peut obtenir de manière complète tous les membres d'une même famille.

Sixièmement, il est avantageux de suivre les diverses consommations de l'unité centrale, de la mémoire ou autres pour chacun des processus, de prévoir des outils de comptabilisation des activités sur un ou plusieurs systèmes informatiques, ce qui n'est pas réalisable avec les systèmes d'exploitation en question.

### Résumé de l'invention

Un premier but de la présente invention est d'obtenir à tout instant des informations multiples sur l'ensemble des processus en cours d'exécution ou terminés ou sur une partie d'entre eux.

Un deuxième but additionnel de l'invention est de faciliter le dépannage et la maintenance des systèmes informatiques concernés.

Un troisième but de l'invention est également de retrouver tous les membres d'une famille de processus dans un système donné afin d'optimiser ce dernier.

Un quatrième but de l'invention est de faciliter la création d'applications lourdes ainsi que d'assurer le suivi des traitements par lots.

Un cinquième but de l'invention est de connaître les diverses consommations de l'unité centrale, de la mémoire ou autres pour chacun des processus, de mettre en place des outils de comptabilisation des activités.

Dans ce contexte, la présente invention propose un procédé d'obtention d'informations relatives à au moins un processus opérant au sein d'un système d'exploitation, caractérisé en ce qu'il consiste à :
- créer une structure dans laquelle les caractéristiques de chaque processus créé ou terminé sont mémorisées et les relations entre processus sont ordonnées ; et
- extraire des informations à partir de ladite structure.

La présente invention se rapporte également à un système informatique comprenant au moins un processeur, au moins un bloc de mémoire centrale, le système informatique étant géré par un système d'exploitation dans lequel opère au moins un processus, caractérisé en ce qu'il contient en mémoire un programme permettant l'exécution d'un processus de gestion apte à créer une structure dans laquelle les caractéristiques de chaque processus créé ou terminé sont mémorisées et les relations entre processus sont ordonnées.

### Présentation des figures

Les caractéristiques et avantages de l'invention apparaîtront à la lumière de la description qui suit, donnée à titre d'exemple illustratif et non limitatif de la présente invention, en référence aux dessins annexés dans lesquels :
- la figure 1 est un schéma simplifié global d'un système informatique selon la présente invention ;
- la figure 2 représente de manière simplifiée le corps du programme d'un processus ;
- la figure 3 représente de manière simplifiée le corps du programme d'une bibliothèque chargeable dynamiquement ;
- la figure 4 est un schéma simplifié partiel du système informatique selon la figure 1 ;
- la figure 5 est un schéma simplifié partiel du système informatique selon la figure 1 en cours d'exécution ;
- la figure 6 est un diagramme synoptique de l'algorithme utilisé dans l'une des étapes du procédé selon l'invention.

### Description d'une forme de réalisation de l'invention

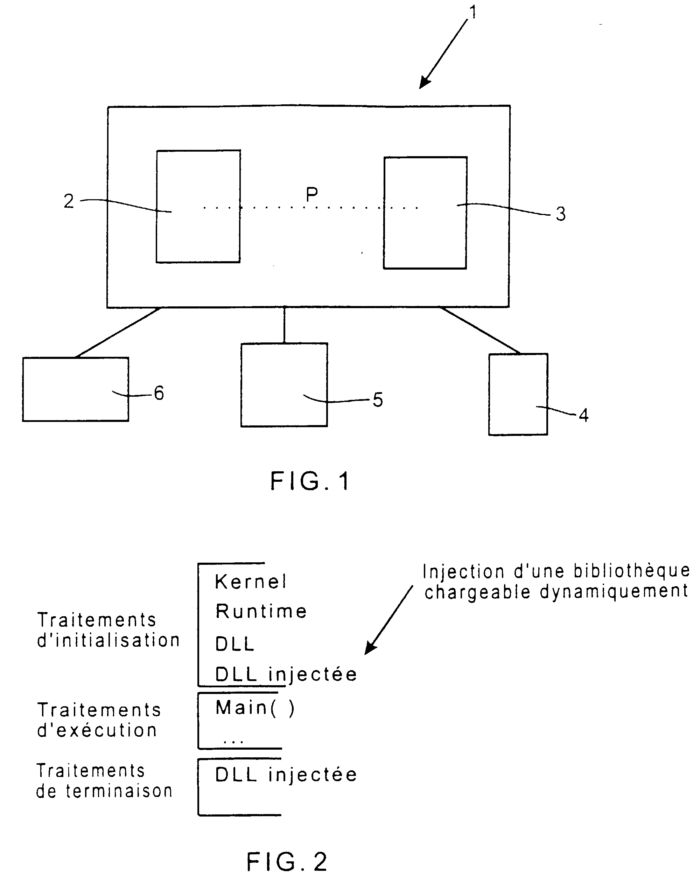

Comme représenté sur la figure 1, le système informatique 1 selon la présente invention comprend de manière connue au moins un processeur 2 effectuant toutes les opérations nécessaires au déroulement d'au moins un processus désigné par la référence générale P, au moins un bloc de mémoire centrale 3, une mémoire de masse 4 constituée dans le cas présent d'un périphérique de type disque, et des périphériques tels que des terminaux 5 et une imprimante 6.

Un système d'exploitation de type Windows NT (marque déposée) gère le fonctionnement du système informatique 1.

Au sens de la présente description, un processus P est un programme en cours d'exécution. Il correspond à un partage logique du travail dans le système d'exploitation. L'activité sur un système est générée par les processus. Il est à noter qu'un programme est une entité passive contenue dans un fichier en mémoire 3 alors qu'un processus est une entité active réalisant des fonctionnalités prévues dans le programme et comportant à cet effet un espace d'adressage virtuel en mémoire, un programme exécutable, un ou plusieurs chemins d'exécution appelés plus communément threads, une partie des ressources d'un utilisateur et une partie des ressources du système d'exploitation. Chaque processus est désigné par un numéro qui l'identifie dans le système, ci-après appelé l'identifiant du processus, plus communément appelé PID (Process IDentificator), et possède un ensemble de caractéristiques telles que :
■ un nom ;
■ un code de terminaison indiquant si le processus s'est correctement terminé ;
■ des paramètres de lancement ;
■ des liens de parenté avec d'autres processus : un processus est appelé processus fils lorsqu'il a été créé à partir d'un autre processus, dit processus père ;
■ une consommation Unité Centrale/Mémoire... ;
■ un nom d'utilisateur ayant lancé le processus ;
■ etc.

Comme illustré sur la figure 2, le programme d'un processus P contient des traitements que ledit processus doit exécuter successivement. Des traitements d'initialisation sont effectués à la création du processus et des traitements de terminaison sont effectués à la terminaison de celui-ci. Entre les traitements d'initialisation et de terminaison, il existe des traitements d'exécution du processus introduits par la commande « main ». Par exemple, parmi les traitements d'initialisation, la fonction « kernel » est une fonction d'initialisation permettant au processus d'appeler le noyau du système; la fonction « runtime » est une fonction d'initialisation donnant accès à une bibliothèque facilitant la programmation. Les traitements d'initialisation peuvent également faire appel à des bibliothèques chargeables dynamiquement (appelées généralement DLL, Dynamic Load Library). Les traitements d'initialisation ont notamment pour buts de préparer le fonctionnement du processus à l'utilisation du système informatique et d'initialiser des variables ou autres. Les traitements de terminaison ont notamment pour buts de fermer les fichiers ouverts par le processus concerné, libérer les objets partagés avec d'autres processus et supprimer ou fermer les liens de communication avec ledit processus. Les traitements de terminaison sont généralement associés aux traitements d'initialisation : ils comprennent, de manière supplémentaire par rapport aux traitements d'initialisation, des actions liées aux objets ou aux mécanismes mis en oeuvre par le processus durant son exécution.

Dans les systèmes d'exploitation utilisés dans l'invention, une ou plusieurs bibliothèques chargeables dynamiquement supplémentaires sont susceptibles d'être injectées dans les parties relatives aux traitements d'initialisation du programme d'un processus (figure 2). Les bibliothèques chargeables dynamiquement injectées sont conservées par le processus pendant les traitements d'exécution et utilisées à nouveau dans les traitements de terminaison.

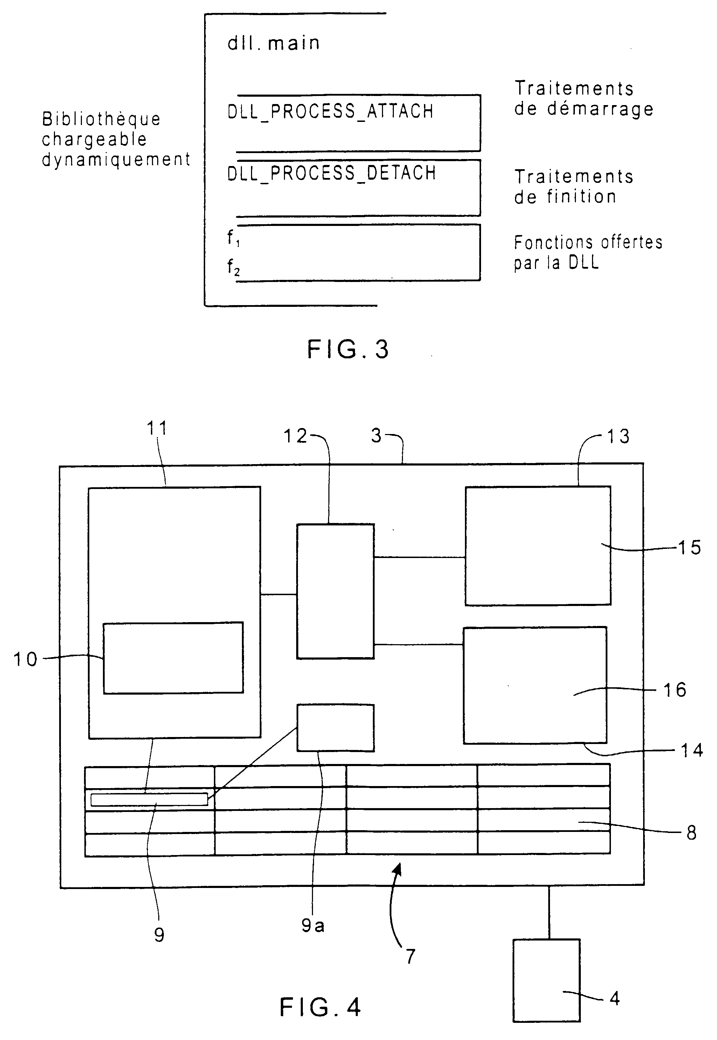

La structure générale simplifiée du corps d'une bibliothèque chargeable dynamiquement dans un processus est représentée sur la figure 3: la bibliothèque chargeable dynamiquement permet de réaliser des traitements de démarrage (DLL_PROCESS_ATTACH) de manière quasi-simultanée à la création du processus, de réaliser des traitements de finition (DLL_PROCESS_DETACH) de manière quasi-simultanée à la terminaison du processus et d'offrir des fonctions f₁,f₂ pour les traitements du processus, ci-après appelées fonctions offertes.

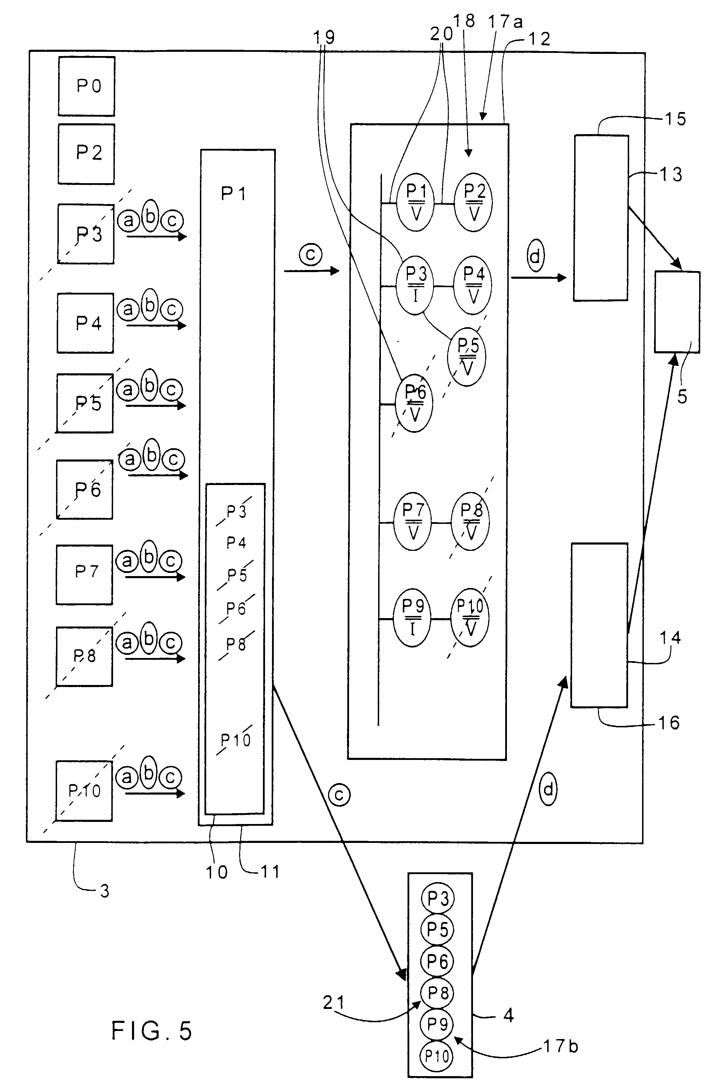

Les figures 4 et 5 représentent le bloc de mémoire centrale 3 du système informatique 1 selon la présente invention illustré sur la figure 1, respectivement dans un état statique et dynamique.

Comme le montre la figure 4, le bloc de mémoire centrale 3 comporte, de manière connue, une base d'information 7, appelée dans le système d'exploitation Windows NT, « Registry NT». La base d'information 7 est constituée de clés 8. Une bibliothèque de détection 9 chargeable dynamiquement (DLL) est enregistrée dans une clé 8 de la base d'information 7. Le corps de la bibliothèque de détection 9 comporte des traitements de démarrage DLL_PROCESS_ATTACH et de finition DLL_PROCESS_DETACH mais ne comporte aucune fonction offerte.

Les traitements de démarrage et de finition de la bibliothèque de détection 9 comportent un appel à une bibliothèque de lecture 9a. Le contenu du corps de la bibliothèque de lecture 9a diffère de celle de la bibliothèque de détection 9. Le corps de la bibliothèque de lecture 9a ne comprend aucun traitement de démarrage ou de finition mais comprend au moins une fonction offerte de lecture des caractéristiques souhaitées de processus et une fonction offerte de transmission des caractéristiques lues dans un espace d'accueil 10 pour mémorisation temporaire. On suppose dans la forme de réalisation décrite dans ce qui suit que le corps comprend une fonction offerte de lecture.

Comme représenté sur la figure 5, la référence générale P d'un processus est associée à une référence particulière 0 à 10 permettant une identification de chaque processus P0 à P10 décrit dans ce qui suit à titre illustratif et non limitatif.

Le bloc de mémoire centrale 3 (figure 4) comporte un espace 11 de gestion dans lequel est installé le programme d'un processus P1. L'espace 11 de gestion contient l'espace d'accueil 10 mentionné ci-dessus. Il est à noter que l'espace d'accueil 10 pourrait être extérieur à l'espace de gestion 11.

Un espace de rangement 12 est prévu dans la mémoire centrale 3.

Le bloc de mémoire centrale 3 comprend également des espaces 13, 14 de communication respectivement réservés à des interfaces de programmation au niveau applicatif 15 couramment appelées interfaces API (Application Programming Interface) et de type connu, et des fichiers exécutables 16.

Le procédé selon la présente invention opère dans le système informatique 1 de la façon telle que représentée sur la figure 5. Il permet de repérer, dénombrer, et identifier les processus P opérant dans ledit système, dans l'exemple décrit les processus P1 à P10, de saisir, mémoriser et ordonner leurs caractéristiques pour un traitement ultérieur.

Le procédé selon la présente invention comporte quatre étapes mises en évidence sur la figure 5 et consistant à :
a) détecter la création ou la terminaison de chaque processus ;
b) saisir des caractéristiques de chaque processus ;
c) créer une structure dans laquelle les caractéristiques de chaque processus créé ou terminé sont mémorisées et les relations entre processus ordonnées ;
d) extraire des informations à partir de ladite structure.

De manière générale, le procédé est susceptible de se limiter aux étapes b), c), et d) ou aux étapes c) et d) suivant le système d'exploitation utilisé. La forme de réalisation de l'invention décrite dans ce qui suit à titre d'exemple concerne un procédé comportant l'ensemble de ces étapes.

Dans la forme de réalisation illustrée sur la figure 5, onze processus P0 à P10 sont représentés à un instant t donné :
- les processus P0 à P2 et P7 sont en cours d'exécution ;
- les processus P4 se crée ;
- les processus P3, P5, P6, P8 et P10 se terminent ; et
- le processus P9 est terminé.

Seuls sont représentés sur la figure 5 les programmes en tant qu'entité passive des processus mis en mémoire 3. Le processus père P0 de gestion du système d'exploitation, activé par la mise en marche du système informatique 1, ainsi que tous les processus qui sont créés jusqu'à la création du processus P1, ne sont pas pris en compte par le procédé selon l'invention dans la forme particulière de réalisation illustrée. Le premier processus détecté par le processus P1 de gestion est donc le processus P1 lui-même.

Il est à noter que le processus père P0 de gestion peut être identifié par des mécanismes propres au système d'exploitation.

La première étape a) du procédé selon l'invention consiste à repérer les nouveaux processus (P4 sur la figure 5) ainsi que ceux qui disparaissent (P3, P5, P6, P8, P10).

La bibliothèque de détection 9, du fait qu'elle est enregistrée dans une clé 8 de la base d'information 7, est automatiquement injectée dans tout processus créé, et plus précisément dans la partié relative aux traitements d'initialisation du programme des processus. Les traitements de démarrage de la bibliothèque de détection 9 s'effectuent après injection et chargement de la bibliothèque de détection dans les traitements d'initialisation du processus ; les traitements de finition de la bibliothèque de détection 9 s'effectuent avant le déchargement de ladite bibliothèque dans les traitements de terminaison du processus.

Les traitements de démarrage DLL_PROCESS_ATTACH et de finition DLL_PROCESS_DETACH de la bibliothèque de détection 9 introduisent une séquence de codes sur chaque événement, respectivement de chargement et déchargement de l'espace d'adresse d'un processus lors respectivement de la création et terminaison dudit processus. Cette séquence de codes réalise le transfert de données spécifiques, respectivement à la création et à la terminaison du processus correspondant, dans l'espace d'accueil 10 prévu à cet effet. Elle transmet, lors des traitements de démarrage et de finition, des données spécifiques respectivement à la création ou terminaison du processus concerné, au processus P1 dans l'espace d'accueil 10 prévu à cet effet dans le bloc de mémoire centrale 3.

La création d'un processus P4 entraîne l'injection de la bibliothèque de détection 9 dans la partie relative aux traitements d'initialisation du programme dudit processus P4, le déroulement des traitements de démarrage DLL_PROCESS_ATTACH de la bibliothèque de détection 9. Les traitements de démarrage exécutent une séquence de code déterminée par laquelle des données spécifiques à la création du processus P4 concerné sont transmises pour mémorisation temporaire dans l'espace d'accueil 10 du processus P1 de gestion. De même, la terminaison d'un processus P3, P5, P6, P8 et P10 entraîne l'exécution des traitements de finition DLL_PROCESS_DETACH de la bibliothèque de détection 9. Les traitements de finition exécutent une séquence de code déterminée par laquelle des données spécifiques à la terminaison du processus concerné P3, P5, P6, P8 et P10 sont transmises pour mémorisation temporaire dans l'espace d'accueil 10 du processus P1.

Un exemple d'algorithme utilisé dans la bibliothèque de détection 9 est donné dans l'annexe 1.

Dans l'étape b), le procédé saisit, c'est-à-dire lit et mémorise de manière temporaire les caractéristiques des processus qui se créent P4 ou qui se terminent P3, P5, P6, P8 et P10 de manière quasi simultanée à la détection respectivement de leur création ou de leur terminaison. La lecture des caractéristiques d'un processus est réalisée à l'aide de la bibliothèque de lecture 9a qui contient une fonction adaptée de lecture des caractéristiques souhaitées. Les caractéristiques lues sont mémorisées de manière temporaire dans l'espace d'accueil 10.

La bibliothèque de lecture 9a est appelée à la création d'un processus P4, par la bibliothèque de détection 9 : elle lit, de manière quasi simultanée à la création, les caractéristiques du processus P4 et elle transmet lesdites caractéristiques à l'espace d'accueil 10 du processus P1 pour mémorisation temporaire. A la terminaison dudit processus, la bibliothèque de lecture saisit de la même façon les caractéristiques du processus dans l'espace d'accueil 10 du processus P1.

La lecture des caractéristiques des processus réalisée par la bibliothèque de lecture 9a est détaillée dans l'annexe 2.

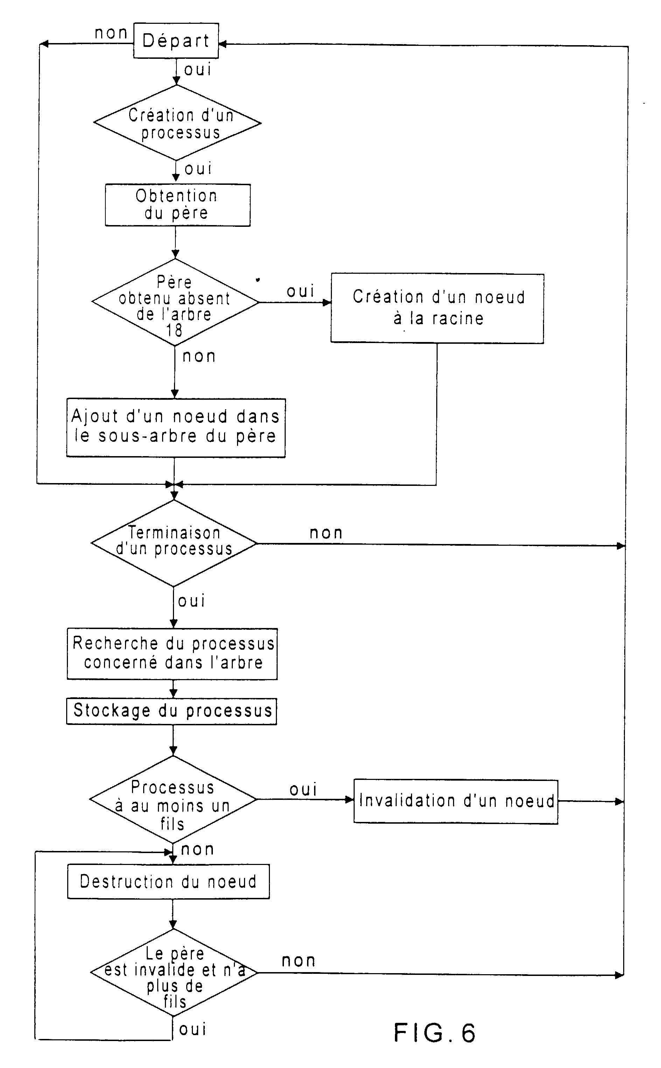

Dans l'étape c), le processus P1 en cours d'exécution, dont le programme est enregistré en mémoire 3 dans l'espace 11 de gestion, reçoit, dans l'espace d'accueil 10, les données spécifiques produites dans l'étape a) par les traitements de démarrage et de finition de la bibliothèque de détection 9 à la création ou terminaison d'un processus P3 à P6, P8 et P10 ainsi que les caractéristiques dudit processus obtenues à l'aide de la bibliothèque de lecture (étape b). Les données spécifiques (étape a) et les caractéristiques du processus P3 à P6, P8 et P10 (étape b) sont ci-après appelées les données captées. Les données captées sont ensuite traitées par le processus P1 dans l'ordre où elles arrivent dans l'espace d'accueil 10. Le processus P1 transfère les données captées de l'espace d'accueil 10 à l'espace de rangement 12 ou au disque 4 dans une structure respectivement 17a, 17b dans laquelle il organise les données captées. Il reconstitue notamment à partir des données captées les relations de parenté entre les processus. Le traitement des données captées par le processus P1 est géré par un algorithme qui est représenté sur la figure 6 et qui sera décrit plus loin en référence aux figures 5 et 6.

Lorsqu'un nouveau processus P4 apparaît, le processus P1 le classe dans la structure 17a. Dans la forme de réalisation illustrée, la structure 17a se présente sous la forme d'un arbre 18. L'arbre, représenté sur la figure 5, est composé de noeuds 19 correspondant chacun à un processus P1...P10. Les noeuds 19 contiennent les caractéristiques du processus correspondant. Ils sont reliés par des liens 20 : un noeud peut être associé à un noeud père (processus père) et à un ou plusieurs noeuds fils (processus fils) entre un premier niveau contenant la racine (sans processus père) et un dernier niveau (sans processus fils). Le processus P1 ordonne les processus en activité dans l'arbre 18 dans lequel il mémorise leurs caractéristiques saisies lors de l'étape b).

A la création d'un processus, le processus P1 obtient à l'aide d'une requête interne au système le processus père direct du processus créé. Le processus P1 recherche le processus père obtenu dans l'arbre 18. Si le processus père obtenu n'est pas retrouvé dans l'arbre 18, cela signifie que le processus père direct du processus créé est le processus P0 ou un des processus créé entre le processus P0 et le processus P1 (voir plus haut). Dans ce cas, un noeud correspondant au processus créé est ajouté à la racine de l'arbre 18. Si le processus père obtenu est retrouvé, il correspond au processus P1 ou à un processus créé après la création de P1. Un noeud est alors ajouté dans le sous-arbre du processus père retrouvé.

Dans l'exemple illustré sur la figure 5, le processus père P3 du processus P4 créé est retrouvé dans l'arbre 18 : le processus père P3 correspond à un processus créé après la création du processus P1. La création du nouveau processus P4 provoque l'ajout d'un noeud dans le sous-arbre du processus P3, et plus précisément la naissance d'un noeud P4 contenant les caractéristiques du processus P4 à sa création et d'un lien entre celui-ci et le processus père P3.

A la terminaison d'un processus, deux cas se présentent :
- le processus terminé P3, dans l'exemple illustré sur la figure 5, a au moins un processus fils P4. Dans ce cas, le processus terminé P3 conserve sa place dans l'arbre 18 mais le processus P1 l'invalide en modifiant sa caractéristique d'invalidation. Lorsque le processus est en cours d'exécution, cette caractéristique d'invalidation a la valeur « valide » et lorsque le processus se termine, elle prend la valeur « invalide ». Sur la figure 5, la valeur « valide » est représentée par la lettre « V » et la valeur « invalide » par la lettre « I ». Ainsi, dans l'exemple illustré, la valeur de la caractéristique relative à l'invalidation du processus P3 est modifiée pour prendre la valeur « I ».
- le processus P5, P6, P8, P10 est un processus père sans fils. Dans ce cas de figure, le processus P5, P6, P8, P10 est détruit. Après la destruction du processus père sans fils P5, P6, P8, P10, deux hypothèses sont possibles :
   ⇒ le processus père P3, P7 du processus respectivement P5, P8 détruit a respectivement au moins un fils P4 et/ou est valide. Les processus P3 qui a un fils P4 et P7 valide conservent leur place dans l'arbre 18.
   ⇒ le processus père P9 du processus P10 détruit est invalide (de la même façon que le processus P3 a été invalidé) et n'a plus de fils. Le processus père P9 est détruit.
   Les deux hypothèses se présentent à nouveau pour le processus P9 détruit et les solutions données sont identiques. En rebouclant successivement sur la deuxième hypothèse, on remonte dans l'arborescence que l'on détruit niveau par niveau.

Un exemple de structure de stockage (arbre 18) est donné à l'annexe 3.

De manière à conserver une trace des processus terminés, tout processus qui se termine est stocké par le processus P1 dans une mémoire, dans l'exemple illustré sur la figure 5 (processus P3, P5, P6, P8 à P10) sur un disque 4 dans un fichier « historique », encore appelé « état civil » car il fournit un état civil de tout processus terminé. Le stockage d'un processus est traité dans la forme de réalisation représentée sur la figure 6 avant toute destruction ou invalidation du noeud correspondant dans la structure 17a. Le fichier enregistre les processus terminés à la suite les uns des autres dans la structure 17b se présentant, dans la forme de réalisation illustrée sur la figure 5, sous la forme d'une liste 21 ou équivalent. Les caractéristiques du processus terminés sont lues et mémorisées de manière temporaire dans l'espace d'accueil 10 à l'aide de la bibliothèque de lecture 9a de manière quasi-simultanée à sa terminaison afin d'en avoir un état final pour la mémorisation dans le fichier historique.

Le stockage des caractéristiques des processus terminés dans un fichier historique est représenté à l'annexe 4.

La structure 17a, 17b est composée dans la forme de réalisation décrite d'au moins un arbre 18 et d'une liste 21. Elle peut être remplacée par tout autre type de structure susceptible de mémoriser les caractéristiques des processus en activité et d'ordonner les liens entre eux afin de retrouver la famille complète d'un processus donné, et de mémoriser les caractéristiques des processus terminés, en vue d'un accès aisé et rapide.

Le procédé, à l'étape c), rétablit les relations entre processus, stocke en structure arborescente leurs caractéristiques, et conserve une trace des processus terminés.

La quantité de données stockées à la suite des étapes a), b) et c) est limitée notamment par l'espace de stockage disponible, les performances souhaitées et les besoins de l'utilisateur.

La dernière étape du procédé d) porte sur l'extraction et l'exploitation des données recueillies et structurées à l'étape c).

Les interfaces de programmation au niveau applicatif 15 (API) et les fichiers exécutables 16 réalisent la communication entre les données obtenues à la fin de l'étape c) et les besoins de l'utilisateur. A tout moment, des informations sont susceptibles d'être extraites de la structure 17a, 17b, et plus précisément de l'arbre 18 en mémoire ou de la liste 21 sur le disque 4, par les interfaces API et fichiers exécutables, et mises à disposition pour consultation ou traitement particulier. Des traitements sont également susceptibles d'être directement effectués par les interfaces API et fichiers exécutables sur lesdites données avant la mise à disposition de l'utilisateur.

Les API 15 et les fichiers exécutables 16 offrent des informations extraites au reste du système 1 ou à l'utilisateur.

Dans l'exemple illustré sur la figure 5, les données extraites et traitées par les interfaces et fichiers exécutables sont transmises à un terminal 5 de type écran pour visualisation par l'utilisateur.

Un exemple de résultats obtenus à l'aide du procédé selon l'invention est donné à l'annexe 5. L'exemple 1 se rapporte aux informations extraites de la liste 21, l'exemple 2 aux informations extraites de l'arbre 18.

L'invention n'est pas limitée à la forme de réalisation décrite et peut présenter des variantes de réalisation.

Ainsi, par exemple, une variante de réalisation de l'étape a) du procédé consiste à enregistrer une demande de notification sur une création ou terminaison de processus (appelée dans Windows NT (marque déposée), psSetCreateProcessNotifyRoutine) : le système d'exploitation ayant connaissance de ladite demande informe le processus P1 de gestion des événements de création ou terminaison de processus. L'étape b) est alors également réalisée de manière différente à partir d'un driver, morceau de code en mode kernel (noyau du système).

Dans la forme de réalisation décrite ci-dessus et illustrée sur les figures 1 et 4 à 6, le procédé selon l'invention crée donc la structure 17a, 17b dans laquelle les caractéristiques de chaque processus créé ou terminé sont mémorisées et les relations entre processus sont ordonnées, et extrait des informations à partir de ladite structure 17a, 17b.

Ladite structure 17a, 17b est créée à partir d'un processus P1 de gestion.

Ladite structure est créée sous la forme d'au moins un arbre 18 dont chaque noeud 19 correspond à un processus et contient les caractéristiques dudit processus, les noeuds étant reliés entre eux par des liens 20 correspondant aux relations processus père/fils.

Le procédé consiste à invalider un noeud 19 dans l'arbre 18, lorsque le processus P3 correspondant au noeud se termine et qu'il a au moins un processus fils, ou à détruire un noeud lorsque le processus P5, P6, P8, P10 correspondant au noeud se termine et qu'il est un processus père P5, P6, P10 sans fils.

Il détruit le noeud d'un processus père P9 d'un processus fils P10 dont le noeud est détruit lorsque ledit processus père est invalide et n'a plus de processus fils.

Il mémorise tous les processus P3, P5, P6, P8 à P10 terminés dans la liste 21 de la structure 17.

Il saisit des caractéristiques de chaque processus avant de créer ladite structure.

Le procédé détecte la création ou la terminaison de chaque processus avant de lire et mémoriser de manière temporaire des caractéristiques de chaque processus. Il réalise la détection de la création ou de la terminaison de chaque processus en injectant de manière automatique lors de la création de chaque processus, la bibliothèque de détection 9 chargeable dynamiquement dans le programme du processus concerné.

La bibliothèque de détection 9 fait appel à la bibliothèque de lecture 9a chargeable dynamiquement munie d'au moins une fonction offerte de lecture des caractéristiques du processus dans le programme duquel la bibliothèque de détection 9 est injectée.

Le système informatique selon la présente invention comprend au moins un processeur 2, au moins un bloc de mémoire centrale 3, le système informatique étant géré par un système d'exploitation dans lequel opère au moins un processus, et est caractérisé en ce qu'il contient en mémoire un programme permettant l'exécution d'un processus P1 de gestion apte à créer une structure 17a, 17b dans laquelle les caractéristiques de chaque processus créé ou terminé sont mémorisées et les relations entre processus sont ordonnées.

Il comprend une mémoire de masse 4 dans laquelle sont mémorisés tous les processus terminés.

Il comprend des Interfaces de Programmation au niveau Applicatif 15 et des fichiers exécutables 16 destinés à extraire des informations à partir de ladite structure 17a, 17b.

Il comprend une bibliothèque de détection 9 chargeable dynamiquement, enregistrée dans une clé 10 d'une base d'information 7 du système d'exploitation.

Le procédé selon l'invention permet ainsi d'obtenir :
- des informations à tout instant sur l'ensemble des processus en activité comme par exemple :
   ■ l'identifiant des processus ;
   ■ l'ensemble des relations de parenté entre processus ;
   ■ les paramètres de lancement du processus ;
   ■ la famille d'appartenance du processus de manière à réguler le système notamment par l'application de règles d'attribution de ressources par famille ;
   ■ etc.
- des informations sur les processus ayant travaillé sur la machine concernée à partir du fichier historique comme par exemple les paramètres de lancement les codes de terminaison ...

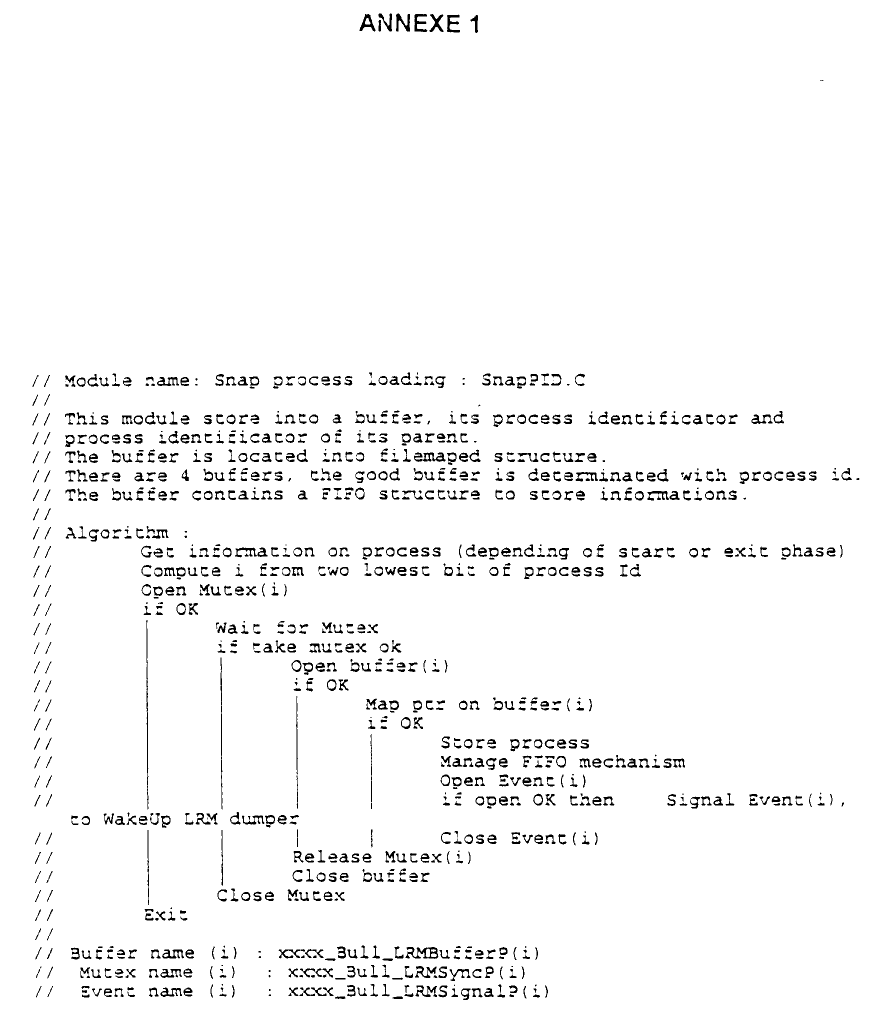

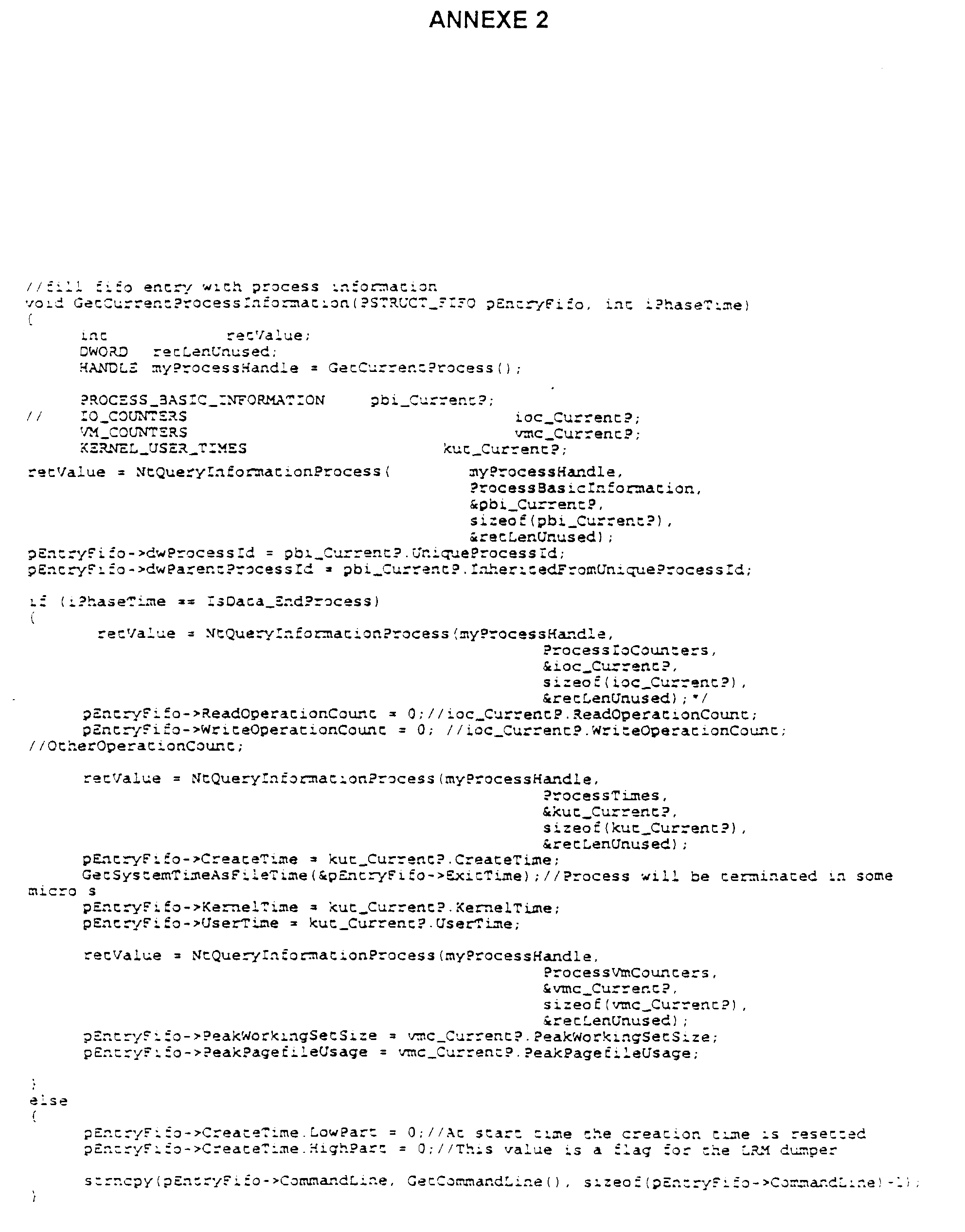

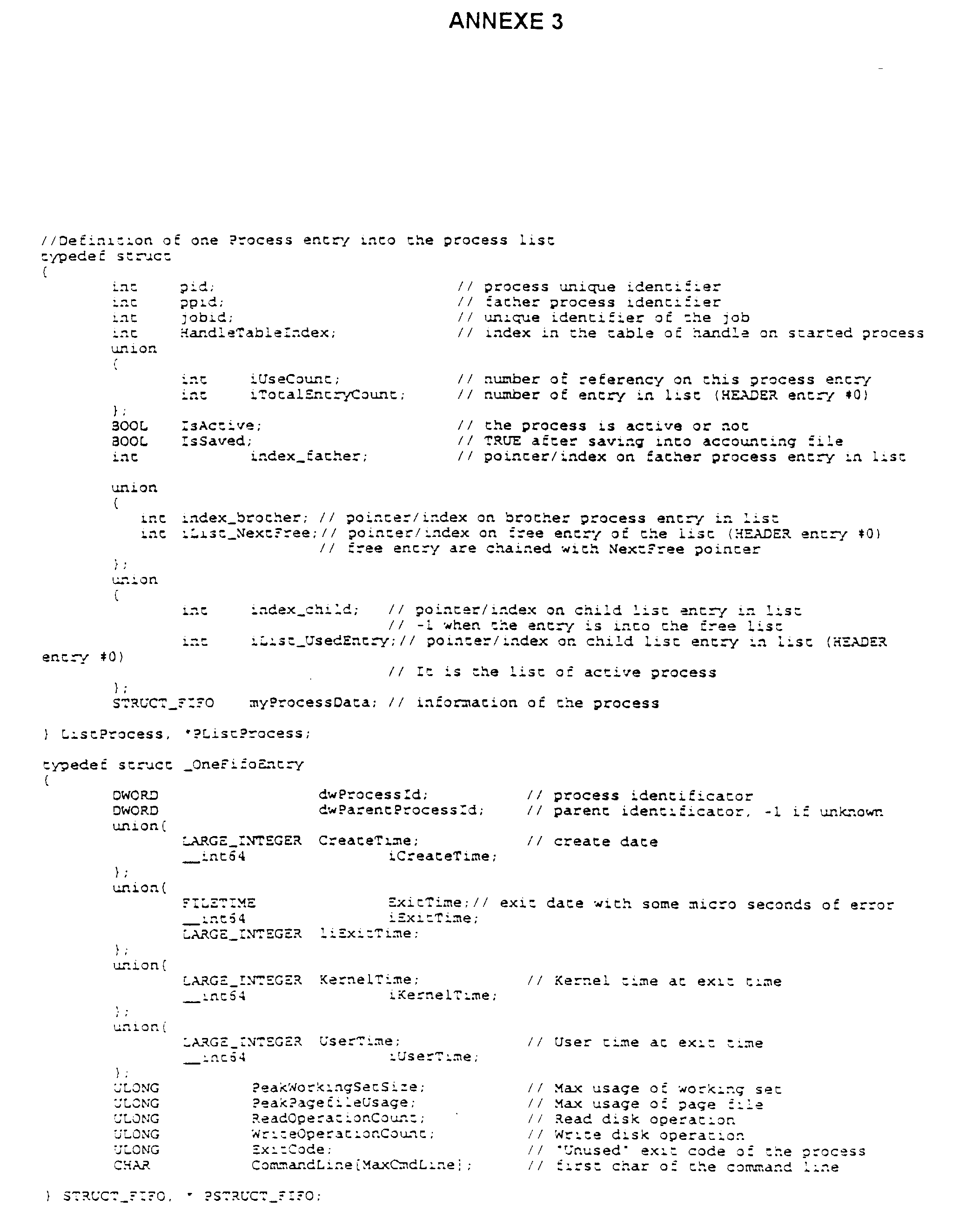

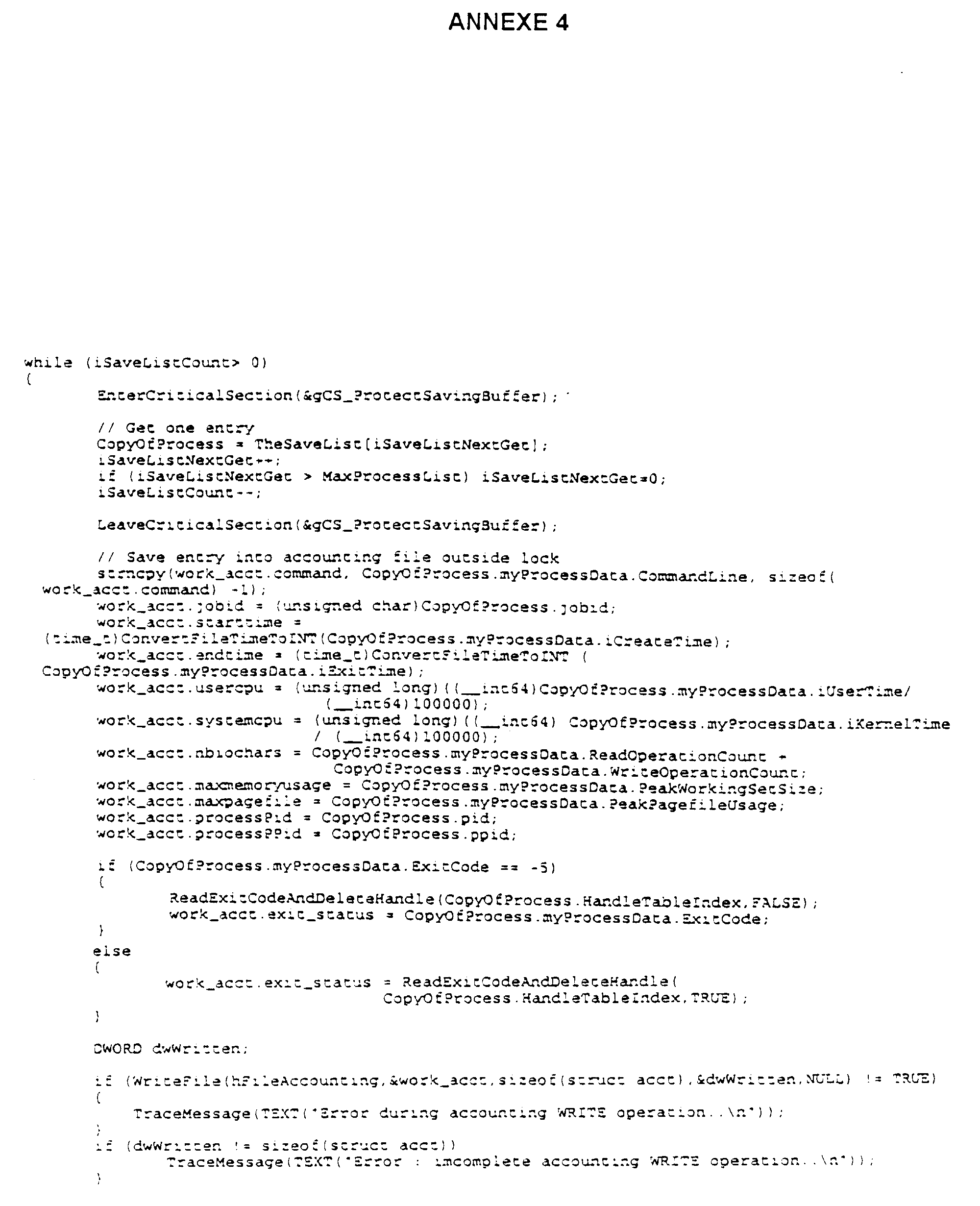

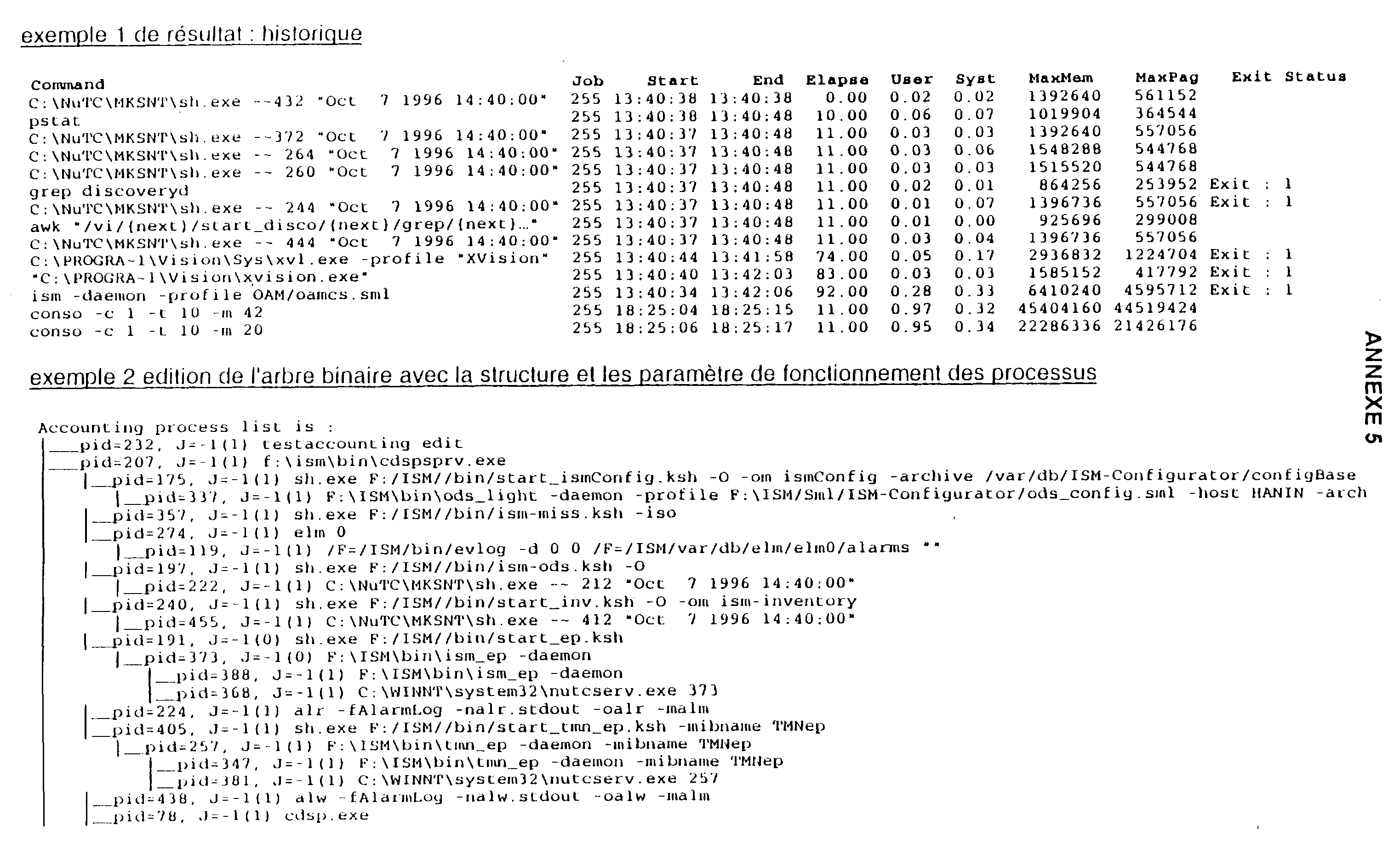

## Revendications

1. Procédé d'obtention d'informations relatives à au moins un processus (P1-P10) opérant au sein d'un système d'exploitation, caractérisé en ce qu'il consiste à :
• créer une structure (17a, 17b) dans laquelle les caractéristiques de chaque processus créé ou terminé sont mémorisées et les relations entre processus sont ordonnées ; et
• extraire des informations à partir de ladite structure (17a, 17b).

2. Procédé selon la revendication 1, caractérisé en ce que ladite structure (17a, 17b) est créée à partir d'un processus (P1) de gestion.

3. Procédé selon l'une des revendications 1 ou 2, caractérisé en ce que ladite structure (17a, 17b) est créée sous la forme d'au moins un arbre (18) dont chaque noeud (19) correspond à un processus et contient les caractéristiques dudit processus, les noeuds étant reliés entre eux par des liens (20) correspondant aux relations processus père/fils .

4. Procédé selon la revendication 3, caractérisé en ce qu'il consiste à invalider un noeud (19) dans l'arbre (18), lorsque le processus (P3) correspondant au noeud se termine et qu'il a au moins un processus fils, ou à détruire un noeud lorsque le processus (P5, P6, P8, P10) correspondant au noeud se termine et qu'il est un processus père (P5, P6, P10) sans fils.

5. Procédé selon la revendication 4, caractérisé en ce qu'il détruit le noeud d'un processus père (P9) d'un processus fils (P10) dont le noeud est détruit lorsque ledit processus père est invalide et n'a plus de processus fils.

6. Procédé selon l'une des revendications 1 à 5, caractérisé en ce qu'il consiste à mémoriser tous les processus (P3, P5, P6, P8 à P10) terminés dans une liste (21) de la structure (17a, 17b).

7. Procédé selon l'une des revendications 1 à 6, caractérisé en ce qu'il consiste à saisir des caractéristiques de chaque processus avant de créer ladite structure.

8. Procédé selon la revendication 7, caractérisé en ce qu'il consiste à détecter la création ou la terminaison de chaque processus avant de saisir des caractéristiques de chaque processus.

9. Procédé selon la revendication 8, caractérisé en ce qu'il réalise la détection de la création ou la terminaison de chaque processus en injectant de manière automatique lors de la création de chaque processus, une bibliothèque de détection (9) chargeable dynamiquement dans le programme du processus concerné.

10. Procédé selon la revendication 9, caractérisé en ce que la bibliothèque de détection (9) fait appel à une bibliothèque de lecture (9a) chargeable dynamiquement munie d'au moins une fonction offerte de lecture des caractéristiques du processus dans le programme duquel la bibliothèque de détection (9) est injectée.

11. Système informatique comprenant au moins un processeur (2), au moins un bloc de mémoire centrale (3), le système informatique étant géré par un système d'exploitation dans lequel opère au moins un processus, caractérisé en ce qu'il contient en mémoire un programme permettant l'exécution d'un processus (P1) de gestion apte à créer une structure (17a, 17b) dans laquelle les caractéristiques de chaque processus créé ou terminé sont mémorisées et les relations entre processus sont ordonnées.

12. Système informatique selon la revendication 11, caractérisé en ce qu'il comprend une mémoire de masse (4) dans laquelle sont mémorisés tous les processus terminés.

13. Système informatique selon l'une des revendications 11 ou 12, caractérisé en ce qu'il comprend des Interfaces de Programmation au niveau Applicatif (15) et des fichiers exécutables (16) destinés à extraire des informations à partir de ladite structure (17a, 17b).

14. Système informatique selon l'une des revendications 11 à 13, caractérisé en ce qu'il comprend une bibliothèque de détection (9) chargeable dynamiquement, enregistrée dans une clé (10) d'une base d'information (7) du système d'exploitation.
